# EUROPÄISCHE PATENTSCHRIFT

(11) **EP 1 365 363 B1**
(45) Veröffentlichungstag und Bekanntmachung des Hinweises auf die Patenterteilung: **03.10.2012**
(21) Anmeldenummer: 03008899.1
(22) Anmeldetag: 30.04.2003
(51) Int. Cl.: G06F 21/00, G07F 7/10

(54) **Verfahren zur Ausführung einer Datentransaktion mittels einer aus einer Haupt- und einer trennbaren Hilfskomponente bestehenden Transaktionsvorrichtung**
Method for carrying out a data transaction by means of a transaction device which consists of a main- and a separable auxiliary component
Méthode pour effectuer des transactions de données à l'aide d'un dispositif de transaction comportant un composant principal et un composant annexe séparable

(30) Priorität: 02.05.2002 DE 10219731
(43) Veröffentlichungstag der Anmeldung: 26.11.2003
(73) Patentinhaber: Giesecke & Devrient GmbH, 81677 München (DE)
(72) Erfinder: Pumberger, Günter, 80809 München (DE)

(56) Entgegenhaltungen:
- EP-A- 0 588 339
- WO-A-00/28493
- WO-A-98/25220
- US-A- 5 677 955
- US-A- 5 905 976
- US-A- 6 021 202

## Beschreibung

Die Erfindung geht aus von einer Transaktionsvorrichtung nach der Gattung des Hauptanspruchs. Eine solche ist beispielsweise in der Zeitschrift "Geldinstitute 1-2/97", Seite 88 bis 89 vorgeschlagen. Danach soll zur Erzeugung einer digitalen elektronischen Signatur ein sicheres, geschlossenes System bereitgestellt werden, welches aus einem Lesegerät im Format einer PC-Card sowie einer sogenannten Smartcard, d.h. einer scheckkartengroßen Plastikkarte mit einem Mikroprozessor bestehen soll. Eingesetzt in einen PC oder einen Computerterminal dient die aus Lesegerät und Smartcard gebildete Vorrichtung zur Identifizierung eines Benutzers sowie zur Verschlüsselung von Informationen. Insbesondere dient das Lesegrerät zur Bereitstellung einer digitalen Signatur durch Ausführung eines asymmetrischen Verschlüsselungsverfahrens. Der dabei eingesetzte geheime Schlüssel des Nutzers ist auf der Smartcard abgelegt.

Die vorgenannte Transaktionsvorrichtung bietet eine große Sicherheit gegen unerwünschte Ausspähung der Transaktionsausführung und damit gegen unerwünschte Nachahmung. Die Transaktionsvorrichtung ist dadurch für die Ausführung sicherheitskritischer Transaktionen prädestiniert. Einen Schwachpunkt im Hinblick auf ihre Handhabung bildet allerdings die serielle Schnittstelle zu der Smartcard. Je größer die von der Smartcard zu bearbeitenden Datenmengen werden, desto mehr Zeit ist für den Datenaustausch mit dem Lesegerät erforderlich. In Verbindung mit sicherheitskritischen Anwendungen zeichnet sich nun indes genau eine Entwicklung zu immer größeren Datenmengen hin ab. Dies gilt beispielsweise für die eingesetzten Schlüssel oder besonders für Zertifikate zu öffentlichen Schlüsseln, die in asymmetrischen Verschlüsselungsverfahren eingesetzt werden. Für den Nutzer einer Transaktionsvorrichtung können hieraus unerwünschte Wartezeiten resultieren.

Das Konzept der digitalen Signatur ist in einer Vielzahl von Veröffentlichungen beschrieben u. a. in dem "Handbuch der Chipkarten", W. Rankl, W. Effing, 3. Auflage, 1999, Seite 197 ff.. Teil des Konzeptes der digitalen Signatur ist danach die Bereitstellung eines von einem sogenannten Trustcenter verwalteten Zertifikates, das den zu dem geheimen Schlüssel des Benutzers korrespondierenden öffentlichen Schlüssel enthält.

WO 00/28493 A1 beschreibt ein Verfahren zur Erstellung einer Signatur zu einem Nutzerdatensatz mit Hilfe einer Chipkarte, die ihr übermittelte Nutzerdaten symmetrisch verschlüsselt und das Ergebnis an ein Computerterminal zurückgibt. Das Ergebnis wird anschließend mit dem Nutzerdatensatz verknüpft.

Aus der US 5,677,955 A ist ein Verfahren zum elektronischen Wertetransfer unter Verwendung von Signaturkarten bekannt, welche unter Verwendung asymmetrischer Verfahren digitale Signaturen erzeugen. Für die Verfahrensdurchführung benötigte öffentliche Schlüssel können in Workstations gespeichert sein, die den Signaturkarten zugeordnet sind.

EP 588 339 A2 offenbart ein Verfahren zur Durchführung eines gesicherten Zahlungsvorganges mittels einer Chipkarte unter Verwendung einer asymmetrischen Verschlüsselungstechnik. Die Chipkarte und ein zugeordnetes Kartenterminal verifizieren sich dabei mit Hilfe eines asymmetrischen Schlüsselpaares gegenseitig.

WO 98/25220 A1 beschreibt die Durchführung einer gesicherten elektronischen Zahlungstransaktion mit Hilfe einer Signaturkarte, die unter Verwendung asymmetrischer Verschlüsselungstechniken eine verkettete Signatur erzeugt.

US 6,021,202 A beschreibt ein Verfahren zur Übermittlung sicherheitskritischer Informationen über ein elektronisches Netzwerk unter Verwendung von Signaturkarten.

Es ist Aufgabe der Erfindung, ein Verfahren zur Ausführung einer Datentransaktion anzugeben, das auf einer sicheren Transaktionsvorrichtung mit erhöhter Geschwindigkeit ausführbar ist.

Diese Aufgabe wird gelöst durch ein Verfahren mit den Merkmalen des Hauptanspruchs. Das erfindungsgemäße Verfahren beruht auf dem Ansatz, daß die Teiltransaktionen, die durch die trennbare Hilfskomponente in Form eines tragbaren Datenträgers mit einer Prozessoreinrichtung ausgeführt werden, in der Regel bei jeder aufeinanderfolgenden Ausführung unverändert wiederholte Verknüpfungsoperationen mit einer Verschlüsselung und/oder der Bildung einer Signatur beinhalten, in denen an sich nicht sicherheitskritische Sekundärdatenelemente in Form eines öffentlichen Schlüssels und/oder eines oder mehrerer Zertifikate verarbeitet werden. Erfindungsgemäß wird nun die Ausführung solcher Verknüpfungsoperationen in die Hauptkomponente in Form eines Lesegeräts verlagert. Hierzu werden für die erstmalige Ausführung einer Teiltransaktion die darin benutzten Sekundärdatenelemente an die Hauptkomponente übertragen und dort gespeichert. Bei der nächsten folgenden Ausführung derselben Teiltransaktion führt dann die Hauptkomponente die Verknüpfungsoperation unter Zugriff auf die gespeicherten Sekundärdatenelemente durch. Dieses erfindungsgemäße Verfahren hat den Vorteil, daß die Sekundärdatenelemente nicht mehr jedes Mal von der Hilfskomponente an die Hauptkomponente übertragen werden müssen.

Um die dadurch eingesparte Übertragungszeit kann sich die Gesamtzeit zur Ausführung der Transaktion verkürzen. Wartezeiten für einen Benutzer entfallen oder reduzieren sich zumindest.

Ein besonderer Vorteil des erfindungsgemäßen Verfahrens ist, dass es ohne weiteres mittels bekannter Komponenten realisierbar ist.

In einer vorteilhaften Ausgestaltung beinhaltet das Verfahren Maßnahmen, welche sicherstellen, daß ein in einer von der Hauptkomponente durchgeführten Verknüpfungsoperation benutztes Sekundärdatenelement stets die jeweils aktuellste Version darstellt. Dies gestattet es, die Sekundärdatenelemente auf der Hilfskomponente unabhängig von der Hauptkomponente zu ändern und trägt damit zur weiteren Verbesserung der Manipulationssicherheit der ausführbaren Transaktionen bei.

Die Aktualisierung der Sekundärdatenelemente erfolgt vorteilhaft auf den Eintritt eines vorbestimmten Ereignisses hin, etwa in festgelegten zeitlichen Abständen oder auf ein durch einen Benutzer veranlaßtes Auslösesignal.

In bevorzugter Anwendung dient das erfindungsgemäße Verfahren zur Realisierung von PKI(Public Key Infrastructure)-Anwendungen auf Heimcomputern (PC) unter Nutzung von Chipkarten. Die Chipkarten liefern dabei unter anderem digitale Signaturen. Durch die Pufferung der Sekundärdatenelemente im PC des Nutzers kann hier die in der Regel langsame Übertraungsgeschwindigkeit zwischen Chipkarte und Kartenleser wirkungsvoll kompensiert werden.

Unter Bezugnahme auf die Zeichnung wird nachfolgend eine Ausführung der Erfindung näher erläutert.

### Zeichnung

Es zeigen
- Fig. 1:: den grundsätzlichen Aufbau einer zur Ausführung des Verfahrens geeigneten Anordnung,
- Fig. 2:: ein Flußdiagramm einer Transaktionsausführung.

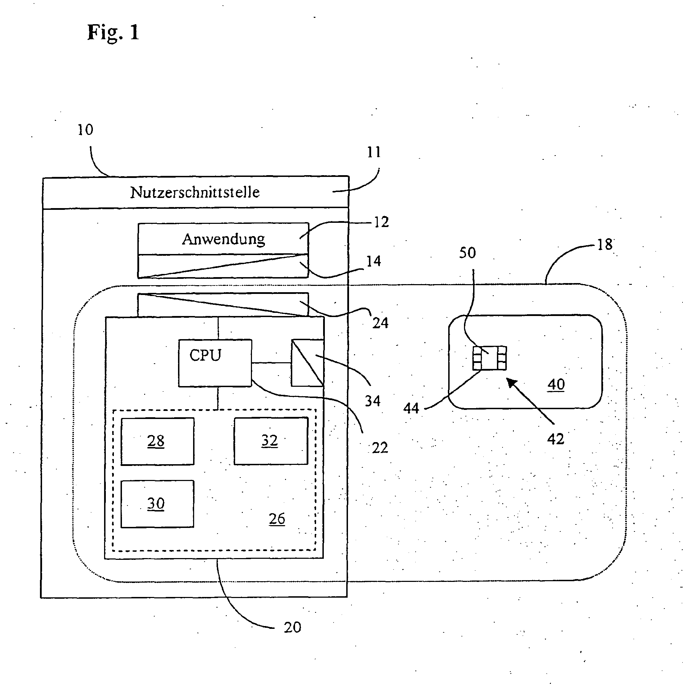

Fig. 1 veranschaulicht die Grundstruktur einer zur Ausführung eines Transaktionsverfahrens geeigneten Anordnung. Sie umfaßt eine Datenverarbeitungsanlage 10, eine der Datenverarbeitungsanlage 10 zugeordnete Hauptkomponente 20 sowie eine separate Hilfskomponente 40, die wiederum der Hauptkomponente 20 zugeordnet ist. Hauptkomponente 20 und Hilfskomponente 40 bildet eine Transaktionsvorrichtung 18.

Die gezeigte Struktur dient zur Ausführung zumindest einer Anwendung, die eine eingelagerte Datentransaktion beinhaltet, welche von der Transaktionsvorrichtung ausgeführt wird. Die Anwendung liegt in Form eines Anwendungsprogrammes vor, mit dem selbsttätig oder unter Einwirkung eines Nutzers Daten bearbeitet werden. Beispiele für Anwendungen sind die Erstellung von E-mails oder die Durchführung von Banktransaktionen auf dem Heimcomputer eines Nutzers. Unter einer eingelagerten Datentransaktion bzw. einer eingelagerten Transaktion werden Datenbearbeitungen verstanden, die aus organisatorischen und/oder technischen Gründen von einer separaten Transaktionsvorrichtung 18 ausgeführt werden. Ein typische Vertreter für eine eingelagerte Transaktion sind sicherheitsrelevante Operationen, die von besonderen, darauf spezialisierten Komponenten ausgeführt werden.

Als Datenverarbeitungsanlage 10 wird jede beliebige Einrichtung angesehen, die zur Ausführung von Anwendungsprogrammen geeignet ist. Üblicherweise beinhaltet sie die Grundelemente eines Computers, d. h. insbesondere eine zentrale Prozessoreinheit zur Ausführung von logischen Operationen, Speichermittel zur Aufnahme von Programmen und Daten sowie eine Nutzerschnittstelle 11 mit Mitteln zur Wiedergabe und zur Eingabe von Daten durch einen Nutzer. Praktisch kann eine Datenverarbeitungsanlage 10 beispielsweise ein nur einem einzelnen Nutzer zugänglicher Heimcomputer oder ein öffentlich zugängliches Terminal sein, wie sie etwa in Banken oder Behörden zu finden sind. Da Aufbau und Betrieb solcher Datenverarbeitungsanlagen 10 hinlänglich bekannt sind, wird darauf nicht weiter eingegangen. Für die folgende Beschreibung wird lediglich vorausgesetzt, daß die Datenverarbeitungsanlage 10 zur Ausführung mindestens eines, im folgenden kurz Anwendung genannten Anwendungsprogrammes 12 eingerichtet ist, dessen Durchführung die Ausführung einer von einer Transaktionsvorrichtung 18 auszuführenden Datentransaktion beinhaltet.

Zur Kommunikation mit der Transaktionsvorrichtung 18 besitzt die Datenverarbeitungsanlage 10 eine Schnittstelle 14. Sie kann von beliebiger Bauart sein und kontaktlos oder kontaktierend arbeiten.

Die Hauptkomponente 20 der Transaktionsvorrichtung 18 ist über eine zu der Schnittstelle 14 der Datenverarbeitungsanlage korrespondierende Schnittstelle 24 mit jener verbunden. Intern ist die Hauptkomponente 20 zur Ausführung mindestens einer eingelagerten Transaktion eingerichtet, in der von der Datenverarbeitungsanlage 10 zugeführte Daten bearbeitet, verändert und an die Datenverabeitungsanlage 10 zurückgegeben werden.

Die Hauptkomponente 20 verfügt hierzu in der Regel ebenfalls über alle Elemente eines Computers. Entsprechend besitzt sie eine zentrale Prozessoreinheit 22, die gemäß einem Betriebsprogramm mindestens eine eingelagerte Transaktion ausführt. Weiter besitzt sie eine Speichereinrichtung 26, die mit der zentralen Prozessoreinheit 22 verbunden ist und die Speicher 28, 30,32 zur nichtflüchtigen Ablage von Daten aufweist.

In einem ersten Speicher 28 der Speichereinrichtung 26 befinden sich die Programme zum Betrieb der Hauptkomponente 20 selbst sowie zur Ausführung der durch die Hauptkomponente 20 ausführbaren, eingelagerten Transaktionen. In einem zweiten Speicher 30 liegen Sekundärdatenelemente, die im Rahmen der Ausführung einer eingelagerten Transaktion verwendet werden.

Bei den Sekundärdatenelementen handelt es sich um Daten bzw. Informationen, die unempfindlich sind gegen Ausspähung und die im Rahmen der eingelagerten Transaktion durch eine bekannte, nicht sicherheitskritische, vorzugsweise lineare Operation mit den Transaktionsdaten verknüpft werden. Ein Sekundärdatenelement wäre z.B. ein Zertifikat über einen öffentlichen Schlüssel, das in einen Transaktionsdatensatz eingefügt wird.

In einem dritten Speicher 32 sind Abgleichsmerkmale abgelegt, die zu den Sekundärdatenelementen korrespondieren und es ermöglichen, die Aktualität der im Speicher 30 abgelegten Sekundärdatenelemente festzustellen. Als Abgleichsmerkmal kann in einer besonders einfachen Ausführung eine fortlaufende Nummer dienen. Daneben kommt als Abgleichsmerkmal eine Vielzahl anderer Merkmale in Betracht, sowohl fest in der Hilfskomponente 40 abgespeicherte Merkmale, wie eine Seriennummer, eine Identitätsnummer der Hilfskomponente, eine Information über den Besitzer einer Hilfskomponente oder ein einer Hilfskomponente zugeordnetes Verfallsdatum, als auch variable, dynamisch ermittelte Merkmale wie eine Zufallszahl, ein Zeitstempel, eine über andere der vorgenannten Merkmale gebildete Prüfsumme oder ein über andere Merkmale gebildeter Hashwert. Bei Verwendung dynamischer, veränderlicher Abgleichsmerkmale kann vorgesehen sein, daß ihre Berechnung in der Hauptkomponente 20 erfolgt.

Weiterhin besitzt die Hauptkomponente 20 eine Schnittstelle 34 zur Kommunikation mit der Hilfskomponente 40. Die Schnittstelle 34 kann ebenfalls von einem beliebigen Typ sein und kontaktlos oder kontaktierend wirken. Besitzt die Hilfskomponente 40 die Gestalt eines tragbaren Datenträgers, etwa die Form einer Chipkarte, hat die Schnittstelle 34 typischerweise die Bauform eines üblichen Lesegerätes.

Alle Elemente einer Hauptkomponente 20 sind über geeignete Datenverbindungen miteinander verbunden.

Die Hauptkomponente 20 kann als eigenständiges Hardwareelement ausgebildet sein, das in eine Datenverarbeitungsanlage 10 eingesetzt oder ihr über eine geeignete dauerhafte Verbindung fest zugeordnet wird. Alternativ können Elemente der Hauptkomponente 20 ganz oder teilweise durch in der Datenverarbeitungsanlage 10 vorhandene Elemente realisiert sein. Dies gilt etwa für die Speichereinrichtung 26; diese kann zum Beispiel auf einer in der Datenverarbeitungsanlage vorhandenen Festplatte, aber auch durch ein separates, mit der Datenverarbeitungsanlage gekoppeltes Speichermedium realisiert sein . Die Hauptkomponente 20 kann entsprechend teilweise in Softwareform realisiert sein.

Die Hilfskomponente 40 dient zur manipulationssicheren und gegen Ausspähung geschützten Ausführung von sensiblen Operationen im Rahmen einer auszuführenden eingelagerten Transaktion. Sie ist als von der Hauptkomponente 20 trennbare eigenständige Einheit ausgebildet und besitzt eine zu der Schnittstelle 34 der Hauptkomponente 20 korrespondierende Schnittstelle 44. Sie kann entsprechend von einem kontaktierenden oder kontaktlos arbeitenden Typ sein. Ein wesentliches Element der Hilfskomponente 40 bildet eine Prozessoreinrichtung 42, welche die wesentlichen Elemente eines üblichen Computersystems aufweist, also insbesondere eine zentrale Prozessoreinheit sowie Speichermittel 50 zur nichtlüchtigen Ablage von Daten und Programmen. Die Hilfskomponente besitzt 40 die Form eines tragbaren Datenträgers, vorzugsweise in Gestalt einer Chipkarte. Der Chip beinhaltet dann die Prozessoreinrichtung 42, die Schnittstelle 44 wird bei einer kontaktierend arbeitenden Chipkarte durch das Kontaktfeld des Chips gebildet, bei einer kontaktlosen Kaste durch die Spule.

In der Speichereinrichtung 50 der Prozessoreinrichtung 42 befinden sich das Betriebsprogramm zur Ausführung der sensiblen Operationen sowie darin verwendete feste und variable Daten. Typische feste Daten sind dabei z. B. kryptographische Schlüssel zur Ausführung von Verschlüsselungen, eine der Hilfskomponente 40 zugeordnete Seriennummer, eine der Prozessoreinrichtung 42 zugeordnete Identifizierungsnummer oder eine einem Besitzer der Hilfskomponente 40 bezeichnende Information. Variable gespeicherte Daten können z. B. eine Zufallszahl, ein Zeitstempel, eine Prüfsumme oder ein über eine Mehrzahl von Daten gebildeter Hashwert sein. Grundsätzlich sind die in der Speichereinrichtung 50 hinterlegten Daten unzugänglich und allenfalls unter besonderen Bedingungen, z. B. nach erfolgreicher Ausführung von speziellen Authentifizierungsprozeduren zugänglich. Vorgesehen sein kann, daß in einer Speichereinrichtung 50 mehrere, jeweils verschiedenen Hauptkomponenten 20 zugeordnete Sekundärdatenelemente abgelegt sind.

Bestimmte in der Speichereinrichtung 50 hinterlegte Daten sind allerdings ausdrücklich für die Herausgabe nach außen vorgesehen, nicht geheim und entsprechend leicht zugänglich. Diese Daten werden hier als Sekundärdatenelemente bezeichnet. Daten dieses Typs sind ein im Rahmen eines asymmetrischen Verschlüsselungsverfahrens einzusetzender öffentlicher Schlüssel oder ein oder mehrere verschiedene Zertifikate, etwa ein Zertifikat über einen öffentlichen Schlüssel oder eine Zertifikatskette mit Zertifikaten verschiedener zertifizierender Stellen. Sekundärdatenelemente können weiter öffentlich zugängliche Strukturinformationen über das in der Hilfskomponente 40 verwendete Dateisystem, zu den mit der Hilfskomponente 40 ausführbare Anwendungen oder zu bestimmten auf der Hilfskomponente 40 vorhandenen Datenelementen sein. Mögliche Sekundärdatenelemente sind ferner öffentlich lesbare Informationen, etwa Name oder Adresse, über den Eigentümer oder den Herausgeber der Hilfskomponente 40.

Die Sekundärdatenelemente werden häufig durch einfache, lineare Operationen, etwa durch Anhängen, mit den Transaktionsdaten verknüpft; die Anwendung komplexer Operationen wird aber keineswegs ausgeschlossen. Die Verknüpfungsoperationen sind selbst wiederum nicht sicherheitskritisch oder geheim und dürfen auch außerhalb der Hilfskomponente 40 ausgeführt werden.

Die nicht sensiblen Sekundärdatenelemente werden regelmäßig vor Ausführung einer Transaktion ganz oder teilweise ausgelesen. Hierbei können allerdings die Sekundärdatenelemente eine solche Größe besitzen, daß sie nur in einer für einen Nutzer merklichen Übertragungszeit, die typischerweise im Bereich einiger Sekunden liegt, über die Schnittstelle 44,34 an die Hauptkomponente 20 übertragen werden können.

Durch das hier vorgeschlagene Verfahren wird erreicht, daß Sekundärdatenelemente weniger häufig übertragen werden müssen und die Zeit für die Ausführung einer eingelagerten Transaktion entsprechend verkürzt wird.

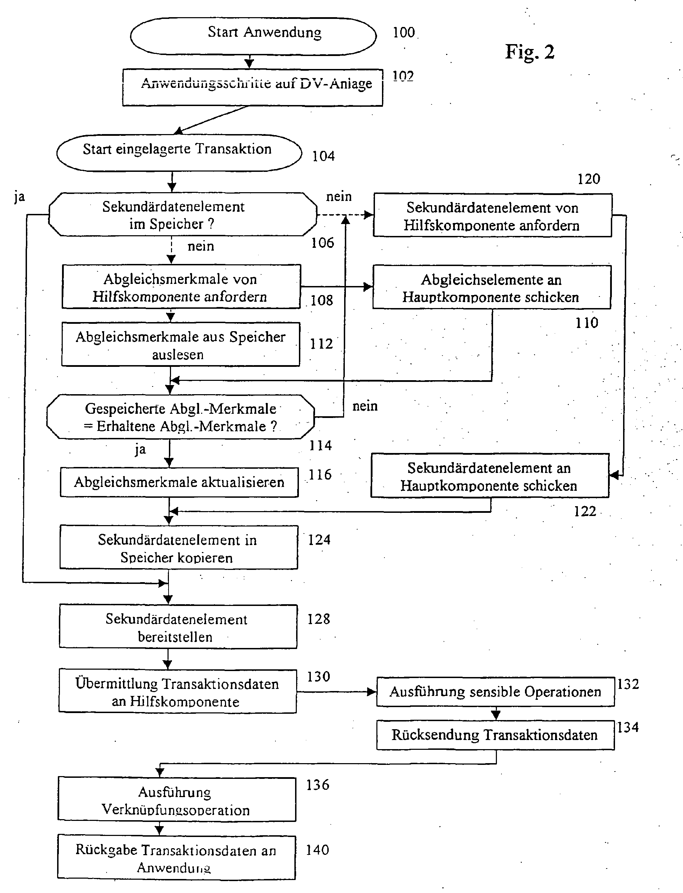

Fig. 2 veranschaulicht das Zusammenwirken der Elemente der in Fig.1 gezeigten Struktur bei der Ausführung einer Anwendung, in deren Rahmen eine eingelagerte Transaktion durch die Transaktionsvorrichtung 18 ausgeführt wird.

Das Flußdiagramm beginnt mit dem Start der Anwendung auf der Datenverarbeitungsanlage 10, Schritt 100. Bei der Anwendung kann es sich etwa um die Erstellung einer E-mail handeln, die anschließend unter Verwendung einer Chipkarte, welche als Hilfsvorrichtung 40 fungiert, signiert wird.

An den Startschritt 100 schließen sich in der Regel zunächst Verfahrensschritte 102 im Rahmen der gestarteten Anwendung an, die auf der Datenverarbeitungsanlage 10 ausgeführt werden. Im Beispiel einer E-mail-Erstellung können dies z. B. Schritte zur Texteingabe oder zur Durchführung einer Rechtschreibprüfung sein. An einem von der Anwendung selbst oder von einem Nutzer festgelegten Punkt bei der Anwendungsdurchführung erfolgt der Start einer eingelagerten Transaktion, die durch die Transaktionsvorrichtung 18 ausgeführt wird, Schritt 104.

Die Ausführung der eingelagerten Transaktion wird zunächst von der zentralen Prozessoreinheit 22 der Hauptkomponente 20 aufgenommen. Nach Erhalt der zu bearbeitenden Transaktionsdaten von der Anwendung 12 und der Ausführung gegebenenfalls vorgesehener Vorbereitungsschritte prüft die zentrale Prozessoreinheit 22, ob das oder die von der Hilfskomponente 40 bereitzustellenden Sekundärdatenelemente, welche im Rahmen der eingelagerten Transaktion mit den Transaktionsdaten verknüpft werden sollen, bereits im Speicher 30 der Hauptkomponente 20 vorhanden sind, Schritt 106. Diese Prüfung kann erfolgen, indem die Prozessoreinheit 22 zunächst nur prüft, ob ein zu dem Sekundärdatenelement korrespondierendes Abgleichsmerkmal im Speicher 32 vorhanden ist.

Der Prüfung auf Vorhandensein in Schritt 106 kann ein Schritt vorgeschaltet sein, mittels dessen die Prozessoreinheit 22 feststellt, ob auf Seiten der Hilfskomponente 40 eine Änderung der Sekundärdatenelemente vorgenommen wurde. Dies Prüfung kann durch eine entsprechende einfache Abfrage realisiert sein. Alternativ kann sie erfolgen, indem die Prozessoreinheit 22 das Abgleichsmerkmal auswertet.

Sind die benötigten Sekundärdatenelemente vorhanden, stellt die zentrale Prozessoreinheit die Sekundärdatenelemente bereit, Schritt 128, übermittelt der Hilfskomponente 40 die von ihr zu bearbeitenden Transaktionsdaten, Schritt 130, und veranlaßt sie, die von der Hilfskomponente 40 vorzunehmenden Operationen auszuführen.

Die Hilfskomponente 40 führt darauf alle im Rahmen der eingelagerten Transaktion vorgesehenen sensiblen Operationen aus, Schritt 132, und übermittelt die resultierenden Transaktionsdaten zurück an die Hauptkomponente 20, Schritt 134. Die Schritte 130 bis 134 können erforderlichenfalls mehrfach hintereinander ausgeführt werden, um im Rahmen einer eingelagerten Transaktion vorgesehene, unterschiedliche, sensible Operationen auszuführen.

Nach Erhalt der resultierenden Transaktiondaten greift die zentrale Prozessoreinheit 22 auf die bereitgestellten Sekundärdatenelemente zu und vervollständigt die Ausführung der eingelagerten Transaktion, indem sie die von der Hilfskomponente 40 erhaltenen Transaktionsdaten mit den Sekundärdatenelementen verknüpft, Schritt 136.

Die danach vorliegenden, bearbeiteten Transaktionsdaten übermittelt die Hauptkomponente 20 über die Schnittstelle 24, 14 zurück an die Anwendung 12, Schritt 140.

Ergibt die Prüfung in Schritt 106, daß sich die benötigten Sekundärdatenelemente nicht im Speicher 30 befinden, fordert die Hauptkomponente 20 die Hilfskomponente 40 auf, ihr die benötigten Sekundärdatenelemente zu übermitteln, Schritt 120. Die Hilfskomponente 40 liest darauf die angeforderten Sekundärdatenelemente aus ihrer Speichereinrichtung 50 aus und übermittelt sie an die Hauptkomponente 20, Schritt 122, welche sie in ihren Speicher 30 übernimmt, Schritt 124.

Stehen die benötigten Sekundärdatenelemente bereit, fährt die Hauptkomponente 20 mit der Ausführung der Transaktion, d.h. mit der Ausführung der Schritte 128 und 130, fort.

Zweckmäßig führt die Hauptkomponente 20 im Anschluß an Schritt 106, bevor sie auf ein Speicher 30 vorhandenes Sekundärdatenelement zugreift, eine Prüfung darauf durch, ob das Sekundärdatenelement gültig ist. Hierzu veranlaßt die zentrale Prozessoreinheit 22 die Hilfskomponente 40, Schritt 108, aus ihrer Speichereinrichtung 50 ein oder mehrere Abgleichsmerkmale auszulesen und an die Hauptkomponente 20 zu übermitteln, Schritt 110. Weiterhin liest die zentrale Prozessoreinheit 22 den Speicher 32 ihrer eigenen Speichereinrichtung 26 aus, Schritt 112,um daraus die zu den von der Hilfskomponente 40 angeforderten korrespondierenden Abgleichmerkmale zu ermitteln.
Nachfolgend Schritt 112 bewertet die zentrale Prozessoreinheit 22 das von der Hilfskomponente 40 erhaltene Abgleichsmerkmal im Hinblick auf das aus dem Speicher 32 entnommene, Schritt 114. Der Einfachheit halber sei angenommen, daß es sich bei dem Abgleichsmerkmal um eine fortlaufende Nummer handele. Die zentrale Prozessoreinheit 22 prüft dann, ob die aus dem Speicher 32 zu einem Sekundärdatenelement ausgelesene fortlaufende Nummer mit derjenigen übereinstimmt, die ihr von der Hilfskomponente 40 übermittelt wurde. Bei Übereinstimmung führt sie die eingelagerte Transaktion unter Verwendung des im Speicher 30 abgelegten Sekundärdatenelementes fort, Schritt 130.

Stimmen die Abgleichsmerkmale nicht überein, ist das korrespondierende Sekundärdatenelement im Speicher 30 nicht mehr gültig. Die zentrale Prozessoreinheit 22 fährt in diesem Fall mit Schritt 120 fort und veranlaßt die Hilfskomponente 40, ihr das oder die für die eingelagerte Transaktion benötigten Sekundärdatenelemente aktuell zu übermitteln.

In einer zweckmäßigen Variante des in Fig. 2 dargestellten Verfahrens fordert die zentrale Prozessoreinheit 22 der Hauptkomponente 20 die für eine eingelagerte Transaktion benötigten Sekundärdatenelemente und die zugehörigen Abgleichsmerkmale von der Hilfskomponente 40 an, d.h. werden die Schritte 120 und 108 ausgeführt, noch bevor sie das Vorhandensein benötigter Sekundärdatenelemente im Speicher 30 feststellt. Die entsprechenden Anforderungen ergehen hierbei zum Beispiel unmittelbar nach dem Start einer eingelagerten Transaktion in Schritt 104. Ungeachtet der vorgeschalteten Ausführung der Schritte 116 bzw. 108 führt die zentrale Prozessoreinheit 22 sodann Schritt 106 aus. Ergibt nun die Prüfung auf Vorhandensein, daß im Speicher 30 die benötigten Sekundärdatenelemente bereits vorhanden und sie auch gültig sind, wird der zuvor eingeleitete Anforderungsvorgang, d.h. die Ausführung der Schritte120 bzw. 108 abgebrochen.

Hat die Gültigkeitsprüfung im Schritt 114 ergeben, daß ein Sekundärdatenelement nicht gültig ist, wird es von der zentralen Prozessoreinheit 22 gelöscht oder mit einem Ungültigkeitsvermerk versehen. Zur Erhöhung des Schutzes gegen Manipulationen oder Fehlfunktionen kann vorgesehen sein, daß Sekundärdatenelemente nach Ablauf vorgegebener Zeiträume oder auf den Eintritt definierter Ereignisse hin unabhängig von ihrer Gültigkeit gelöscht oder als ungültig markiert werden.

Vorgesehen sein kann ferner ein manuelles Löschen und Aktualisieren eines Sekundärdatenelementes durch einen Nutzer. Zweckmäßig erhält der Nutzer hierbei über die Nutzerschnittstelle 11 der Datenverarbeitungsanlage 10 entsprechende von der zentralen Prozessoreinheit 22 generierte Aufforderungen, welche ihn veranlassen, notwendige Aktionen vorzunehmen.

Zunächst erhält der Nutzer zum Beispiel eine Information über die Ungültigkeit eines Sekundärdatenelementes sowie den Hinweis, daß ein gültiges Sekundärdatenelement von der Hilfskomponente 40 anzufordern ist. Weiter erhält er Anweisungen zum Löschen oder Ungültigsetzen der im Speicher 30 befindlichen, ungültigen Sekundärdatenelemente. Sodann wird er angeleitet, die Aktualisierung des Sekundärdatenelementes zu veranlassen. Statt einer Dialogführung des Nutzers über aufeinanderfolgende Einzelaktionen kann selbstverständlich auch eine einzelne Programmfunktion vorgesehen sein, die lediglich vom Nutzer aktiviert werden muß. Vorgesehen sein kann ferner auch, daß das manuelle Löschen/Aktualisieren über andere Kommunikationswege veranlaßt wird, etwa durch gewöhnliche Post.
Zum Schutz gegen Manipulationen werden die Sekundärdatenelemente und die Abgleichsmerkmale in den Speichern 30 bzw. 32 der Hauptkomponente 20 zweckmäßig verschlüsselt abgespeichert. Die Verschlüsselung kann dabei unter Verwendung von in der Hauptkomponente 20 erzeugten und dort auch verwalteten Schlüsseln erfolgen. Alternativ erfolgt die Verschlüsselung unter Verwendung eines Schlüssels, der von der Hilfskomponente 40 bereitgestellt wird. Ein derartiger Schlüssel wird dann nach Start einer eingelagerten Transaktion im Schritt 102 von der zentralen Prozessoreinheit 22 von der Hilfskomponente 40 angefordert. In einer weiteren Variante erfolgt die Verschlüsselung unter Verwendung eines Sitzungsschlüssels ("Session key"), der dann ebenfalls verschlüsselt und in der Speichereinrichtung 26 der Hauptkomponente 20 abgespeichert wird. Die Nutzung eines Sitzungsschlüssels bietet sich insbesondere an, wenn ein solcher für den Datenaustausch zwischen der Hauptkomponente 20 und der Hilfskomponente 40 ohnehin erzeugt wird. Indem er auch in der Hilfskomponente gespeichert wird, kann er auch als Abgleichsmerkmal dienen. Als Alternative oder zur weiteren Verbesserung des Manipulationsschutzes kann zudem die Verwendung von Prüfnummern vorgesehen sein, etwa in Form von Hash-Werten.

Unter Beibehaltung des grundlegenden Gedankens, den Zugriff einer Hauptkomponente 20 auf eine Hilfskomponente 40 zu beschleunigen, indem in einer eingelagerten Transaktion verwendete, nicht sicherheitskritische Sekundärdatenelemente in der Hauptkomponente 20 gespeichert werden und der Zugriff dann auf diese erfolgt, gestattet die vorgeschriebene Lösung eine Vielzahl von Ausgestaltungen. Dies gilt etwa für die interne Struktur der eingesetzten Systemkomponenten. So können sowohl die Hauptkomponente 20 wie die Hilfskomponente 40 wie auch die Datenverarbeitungsanlage 10 andere oder weitere Funktionselemente beinhalten, auf welche die beschriebenen Funktionalitäten in anderer Weise verteilt sind. Als nutzbare Abgleichsmerkmale können neben den genannten ohne weitere auch andere gefunden werden. Ein großer Gestaltungsspielraum ergibt sich ferner für die Handhabung der Sekundärdatenelemente und Abgleichsmerkmale in der Hauptkomponente 20. Hier können insbesondere weitere Mechanismen vorgesehen sein, um zu verhindern, daß im Speicher 30 zwar vorhandene, jedoch nicht mehr aktuelle Sekundärdatenelemente in einer eingelagerten Transaktion verwendet werden. Beispielsweise kann vorgesehen sein, daß regelmäßig die am seltensten verwendeten, die ältesten oder zufällig gewählte Sekundärdatenelemente gelöscht werden und dann neu angefordert werden müssen. Zweckmäßig ist auch die Einrichtung eine Speichermanagements zur Verwaltung insbesondere der Speicher 30, 32. Zur Steuerung der Speicherbelegung kann ein maximaler Speicherplatz festgelegt oder vorgesehen sein, daß regelmäßig die größten oder die am seltensten verwendeten Sekundärdatenelemente gelöscht werden.

## Patentansprüche

1. Verfahren zur Ausführung einer Datentransaktion innerhalb einer Public-Key-Infrastruktur mittels einer Transaktionsvorrichtung (18), die aus einer Hauptkomponente (20) in Form eines Lesegerätes und einer trennbaren Hilfskomponente (40) in Form eines tragbaren Datenträgers mit einer Prozessoreinrichtung (42) besteht, wobei die Datentransaktion wenigstens eine Teiltransaktion umfasst, die durch die Hilfskomponente (40) ausgeführt wird und eine Verknüpfungsoperation umfaßt, die eine Verschlüsselung und/ oder die Bildung einer Signatur beinhaltet, wobei Transaktionsdaten mit einem nicht sicherheitskritischen Sekundärdatenelement in Form eines öffentlichen Schlüssels und/oder eines oder mehrerer Zertifikate verknüpft werden, das in der Hilfskomponente (40) gespeichert ist, **dadurch gekennzeichnet, dass** die Verknüpfungsoperation, in der das nicht sicherheitskritische Sekundärdatenelement mit den Transaktionsdaten verknüpft wird, in die Hauptkomponente (20) verlagert wird, indem für die erstmalige Ausführung der Teiltransaktion das darin benutzte Sekundärdatenelement an die Hauptkomponente (20) übertragen und dort gespeichert wird und bei der nächsten folgenden Ausführung der Teiltransaktion die Hauptkomponente (20) die Verknüpfungsoperation, in der das nicht sicherheitskritische Sekundärdatenelement mit den Transaktionsdaten verknüpft wird, unter Zugriff auf das in der Hauptkomponente (20) gespeicherte Sekundärdatenelement durchführt.

2. Verfahren nach Anspruch 1 **dadurch gekennzeichnet, daß** ein Sekundärdatenelement auf Gültigkeit geprüft wird (114), bevor es von der Hauptkomponente (20) in einer Verknüpfungsoperation verarbeitet wird.

3. Verfahren nach Anspruch 2 **dadurch gekennzeichnet, daß** die Gültigkeitsprüfung anhand eines Abgleichsmerkmales erfolgt, welches von der Hilfskomponente (40) geliefert wird.

4. Verfahren nach Anspruch 2 **dadurch gekennzeichnet, daß** die Gültigkeitsprüfung nach Eintritt eines vorbestimmten Ereignisses vorgenommen wird.

5. Verfahren nach Anspruch 2 **dadurch gekennzeichnet, daß** die Gültigkeitsprüfung durch einen Nutzer ausgelöst wird.

6. Verfahren nach Anspruch 3 danach gekennzeichnet, daß die Anforderung eines Abgleichsmerkmales erfolgt, bevor die Gültigkeitsprüfung vorgenommen wird.

7. Verfahren nach Anspruch 1 danach gekennzeichnet, daß ein an die Hauptkomponente (20) übertragenes Sekundärdatenelement verschlüsselt in einem Speicher (30) der Hauptkomponente (20) abgelegt wird.

8. Verfahren nach Anspruch 7 **dadurch gekennzeichnet, daß** der Schlüssel zur Durchführung der Verschlüsselung von der Hilfskomponente (40) bereit gestellt wird.

9. Transaktionsvorrichtung (18) zur Ausführung einer Datentransaktion innerhalb einer Public-Key-Infrastruktur, die aus einer Hauptkomponente (20) in Form eines Lesegerätes und einer trennbaren Hilfskomponente (40) in Form eines tragbaren Datenträgers mit einer Prozessoreinrichtung (42) besteht, wobei die Datentransaktion wenigstens eine Teiltransaktion umfasst, die durch die Hilfskomponente (40) ausgeführt wird und eine Verknüpfungsoperation umfaßt, die eine Verschlüsselung und/oder die Bildung einer Signatur beinhaltet, wobei Transaktionsdaten mit einem nicht sicherheitskritischen Sekundärdatenelement in Form eines öffentlichen Schlüssels und/ oder eines oder mehrerer Zertifikate verknüpft werden, das in der Hilfskomponente (40) gespeichert ist, **dadurch gekennzeichnet, dass** die Transaktionsvorrichtung dazu ausgestaltet ist, dass die Verknüpfungsoperation, in der das nicht sicherheitskritische Sekundärdatenelement mit den Transaktionsdaten verknüpft wird, in die Hauptkomponente (20) verlagert wird, indem für die erstmalige Ausführung der Teiltransaktion das darin benutzte Sekundärdatenelement an die Hauptkomponente (20) übertragen und dort gespeichert wird und bei der nächsten folgenden Ausführung der Teiltransaktion die Hauptkomponente (20) die Verknüpfungsoperation, in der das nicht sicherheitskritische Sekundärdatenelement mit den Transaktionsdaten verknüpft wird, unter Zugriff auf das in der Hauptkomponente (20) gespeicherte Sekundärdatenelement durchführt.

## Claims

1. A method for executing a data transaction within a public key infrastructure by means of a transaction apparatus (18) which consists of a main component (20) in the form of a reading device and a separable auxiliary component (40) in the form of a portable data carrier having a processor device (42), whereby the data transaction comprises at least one partial transaction which is executed by the auxiliary component (40) and comprises a combining operation which involves an encryption and/or the forming of a signature, whereby transaction data are combined with a security-uncritical secondary data element in the form of a public key and/or of one or several certificates which is stored in the auxiliary component (40), **characterized in that** the combining operation in which the security-uncritical secondary data element is combined with the transaction data is shifted to the main component (20) by, for the first-time execution of the partial transaction, the secondary data element used therein being transferred to the main component (20) and stored there and, upon the next following execution of the partial transaction, the main component (20) carrying out the combining operation in which the security-uncritical secondary data element is combined with the transaction data, while accessing the secondary data element stored in the main component (20).

2. The method according to claim 1, **characterized in that** a secondary data element is checked for validity (114) before it is processed by the main component (20) in a combining operation.

3. The method according to claim 2, **characterized in that** the validity check is effected on the basis of a comparison feature which is delivered by the auxiliary component (40).

4. The method according to claim 2, **characterized in that** the validity check is performed after the occurrence of a predetermined event.

5. The method according to claim 2, **characterized in that** the validity check is triggered by a user.

6. The method according to claim 3, **characterized in that** the request for a comparison feature is effected before the validity check is performed.

7. The method according to claim 1, **characterized in that** a secondary data element transferred to the main component (20) is deposited in a memory (30) of the main component (20) in encrypted form.

8. The method according to claim 7, **characterized in that** the key for carrying out the encryption is made available by the auxiliary component (40).

9. A transaction apparatus (18) for executing a data transaction within a public key infrastructure which consists of a main component (20) in the form of a reading device and a separable auxiliary component (40) in the form of a portable data carrier having a processor device (42), whereby the data transaction comprises at least one partial transaction which is executed by the auxiliary component (40) and comprises a combining operation which involves an encryption and/or the forming of a signature, whereby transaction data are combined with a security-uncritical secondary data element in the form of a public key and/or of one or several certificates which is stored in the auxiliary component (40), **characterized in that** the transaction apparatus is configured for the combining operation in which the security-uncritical secondary data element is combined with the transaction data being shifted to the main component (20) by, for the first-time execution of the partial transaction, the secondary data element used therein being transferred to the main component (20) and stored there and, upon the next following execution of the partial transaction, the main component (20) carrying out the combining operation in which the security-uncritical secondary data element is combined with the transaction data, while accessing the secondary data element stored in the main component (20).

## Revendications

1. Procédé d'exécution d'une transaction de données à l'intérieur d'une infrastructure à clé publique au moyen d'un dispositif de transaction (18) qui consiste en un composant principal (20) sous forme d'un appareil de lecture et en un composant auxiliaire (40) séparable sous forme d'un support de données portable muni d'un appareillage de processeur (42), la transaction de données comprenant au moins une transaction partielle qui est exécutée par le composant auxiliaire (40) et comprenant une opération de combinaison qui comporte un chiffrement et/ou la génération d'une signature, des données de transaction étant combinées avec un élément de données secondaires non critique pour la sécurité sous forme d'une clé publique et/ou d'un ou plusieurs certificats qui est mémorisé dans le composant auxiliaire (40), **caractérisé en ce que** l'opération de combinaison dans laquelle l'élément de données secondaires non critique pour la sécurité est combiné avec les données de transaction est déplacée de manière à se situer dans le composant principal (20) **en ce que**, pour l'exécution initiale de la transaction partielle, l'élément de données secondaires y étant utilisé est transféré au composant principal (20) et est mémorisé dans ce dernier et **en ce que**, lors de l'exécution de la transaction partielle y faisant directement suite, le composant principal (20) exécute l'opération de combinaison dans laquelle l'élément de données secondaires non critique pour la sécurité est combiné avec les données de transaction, en ayant accès à l'élément de données secondaires mémorisé dans le composant principal (20).

2. Procédé selon la revendication 1, **caractérisé en ce qu'**un élément de données secondaires est vérifié (114) quant à sa validité avant d'être traité par le composant principal (20) dans une opération de combinaison.

3. Procédé selon la revendication 2, **caractérisé en ce que** la vérification de validité a lieu à l'aide d'une caractéristique d'alignement qui est livré par le composant auxiliaire (40).

4. Procédé selon la revendication 2, **caractérisé en ce que** la vérification de validité est effectuée après la survenance d'un événement prédéterminé.

5. Procédé selon la revendication 2, **caractérisé en ce que** la vérification de validité est déclenchée par un usager.

6. Procédé selon la revendication 3, **caractérisé en ce que** la réquisition d'une caractéristique d'alignement a lieu avant que la vérification de validité soit effectuée.

7. Procédé selon la revendication 1, **caractérisé en ce qu'**un élément de données secondaires transféré au composant principal (20) est stocké sous forme chiffrée dans une mémoire (30) du composant principal (20).

8. Procédé selon la revendication 7, **caractérisé en ce que** la clé destinée à l'accomplissement du chiffrement est mise à disposition par le composant auxiliaire (40).

9. Dispositif de transaction (18) destiné à l'exécution d'une transaction de données à l'intérieur d'une infrastructure à clé publique, qui consiste en un composant principal (20) sous forme d'un appareil de lecture et en un composant auxiliaire (40) séparable sous forme d'un support de données portable muni d'un appareillage de processeur (42), la transaction de données comprenant au moins une transaction partielle qui est exécutée par le composant auxiliaire (40) et comprenant une opération de combinaison qui comporte un chiffrement et/ou la génération d'une signature, des données de transaction étant combinées avec un élément de données secondaires non critique pour la sécurité sous forme d'une clé publique et/ou d'un ou plusieurs certificats qui est mémorisé dans le composant auxiliaire (40), **caractérisé en ce que** le dispositif de transaction est configuré de telle manière que l'opération de combinaison dans laquelle l'élément de données secondaires non critique pour la sécurité est combiné avec les données de transaction est déplacée de manière à se situer dans le composant principal (20) **en ce que**, pour l'exécution initiale de la transaction partielle, l'élément de données secondaires y étant utilisé est transféré au composant principal (20) et est mémorisé dans ce dernier et **en ce que**, lors de l'exécution de la transaction partielle y faisant directement suite, le composant principal (20) exécute l'opération de combinaison dans laquelle l'élément de données secondaires non critique pour la sécurité est combiné avec les données de transaction, en ayant accès à l'élément de données secondaires mémorisé dans le composant principal (20).
